# EUROPÄISCHE PATENTSCHRIFT

(11) **EP 1 661 658 B1**
(45) Veröffentlichungstag und Bekanntmachung des Hinweises auf die Patenterteilung: **07.03.2007**
(21) Anmeldenummer: 04028335.0
(22) Anmeldetag: 30.11.2004
(51) Int. Cl.: B23K 26/18, B23K 26/38, F02M 61/16

(54) **Vorrichtung zur Herstellung einer Bohrung mittels Laserstrahlung**
Device for making a bore by means of laser beam
Dispositif de fabrication d'un trou au moyen de rayonnement laser

(43) Veröffentlichungstag der Anmeldung: 31.05.2006
(73) Patentinhaber: Delphi Technologies, Inc., Troy, MI 48007 (US)
(72) Erfinder: Giedl, Roswitha, Dr., 94469 Deggendorf (DE); Wild, Michael, Dr., 94469 Deggendorf (DE); Himpsl, Franz, 94579 Zenting (DE); Wagner, Franz Xaver, Dr., 94469 Deggendorf (DE); Schreiner, Bernd, 94571 Schaufling (DE)
(74) Vertreter: Manitz, Finsterwald & Partner GbR

(56) Entgegenhaltungen:
- WO-A-20/04087364
- DE-A1- 10 300 134
- US-A- 4 857 696
- US-A- 5 222 617
- US-A- 6 070 813
- US-A1- 2003 168 437
- US-B1- 6 407 362
- PATENT ABSTRACTS OF JAPAN Bd. 1997, Nr. 07, 31. Juli 1997 (1997-07-31) & JP 09 066381 A (ZEXEL CORP), 11. März 1997 (1997-03-11)

## Beschreibung

Die Erfindung betrifft eine Vorrichtung zur Herstellung einer in einen Hohlraum eines Werkstücks, insbesondere einer Kraftstoffeinspritzdüse, mündenden Bohrung mittels Laserstrahlung, mit einem in den Hohlraum einführbaren und zwischen eine Mündungsöffnung der Bohrung und einen der Mündungsöffnung gegenüberliegenden und den Hohlraum begrenzenden Wandabschnitt des Werkstücks bringbaren Schutzorgan.

Eine derartige Vorrichtung ist grundsätzlich bekannt. Das Schutzorgan dient dazu, den der Mündungsöffnung der Bohrung gegenüberliegenden Wandabschnitt vor einer Beschädigung durch die Laserstrahlung zu schützen, sobald diese nach Durchbohrung des Werkstücks in den Hohlraum eintritt.

Ein aus der US-B-6 407 362 bekanntes Schutzorgan umfasst ein aus hochfestem Glas gebildetes Rohr, dessen Innenwandung mit einer Reflexionsschicht, beispielsweise einer Gold- oder Silberschicht, versehen ist. Durch eine im Bereich der Mündungsöffnung der Bohrung befindliche Öffnung des Rohrs kann die aus der Mündungsöffnung austretende Laserstrahlung in das Rohr einkoppeln. Nach dem Eintritt in das Rohr wird die Laserstrahlung an der Reflexionsschicht vielfach hin und her reflektiert und auf diese Weise aus dem Schutzorgan herausgeführt bzw. in seiner Energie verringert. Als problematisch erweist sich bei dieser bekannten Vorrichtung der Aufwand, der zur Herstellung des rohrförmigen Schutzorgans und insbesondere zur Beschichtung der Innenwandung erforderlich ist.

Eine Vorrichtung gemäß dem Oberbegriff des Anspruchs 1 ist in der DE-A-103 00 134 beschrieben. Ähnliche Vorrichtungen sind auch aus der JP-A-09066381, US-A-6 070 813, US-A-4 857 696, US-A-5 222 617 und WO-A-2004/087364 bekannt.

Der Erfindung liegt die Aufgabe zugrunde, eine Vorrichtung der eingangs genannten Art zu schaffen, die mit einem geringeren wirtschaftlichen Aufwand herstellbar ist und die einen zuverlässigen Schutz der den Hohlraum begrenzenden Wand des Werkstücks vor einer Beschädigung durch die Laserstrahlung dauerhaft gewährleistet.

Zur Lösung der Aufgabe ist eine Vorrichtung mit den Merkmalen des Anspruchs 1 und insbesondere eine Vorrichtung mit einem Schutzorgan vorgesehen, welches massiv, d.h. nicht hohl, ausgebildet ist und ein die Laserstrahlung zumindest teilweise absorbierendes, dispergierendes oder leitendes Material aufweist.

Durch die massive, d.h. nicht hohle, Ausbildung des Schutzorgans ist das Schutzorgan nicht nur einfacher und somit kostengünstiger herstellbar, sondern es ist auch weniger bruchanfällig, d.h. es weist eine längere Lebensdauer auf. Im Ergebnis führt dies zu einer verbesserten Wirtschaftlichkeit der erfindungsgemäßen Vorrichtung.

Indem das Schutzorgan zwischen die Mündungsöffnung der Bohrung und den der Mündungsöffnung gegenüberliegenden und den Hohlraum begrenzenden Wandabschnitt des Werkstücks bringbar ist, kann das Schutzorgan während eines Bohrvorgangs so positioniert werden, dass die aus der Mündungsöffnung austretende Laserstrahlung in das Schutzorgan einkoppelt.

Die Einkopplung der Laserstrahlung in das Schutzorgan führt zu einer erheblichen Verringerung der Energie der Strahlung. Vorzugsweise wird die Energie der Laserstrahlung dabei so weit reduziert, dass die Energie einer gegebenenfalls aus dem Schutzorgan wieder austretenden Laserstrahlung nicht mehr ausreicht, um die den Hohlraum begrenzende Wand des Werkstücks zu beschädigen.

Somit ist die den Hohlraum begrenzende Wand wirksam vor einer Beschädigung durch die Laserstrahlung geschützt und eine optimale Wandbeschaffenheit der Innenwandung des Werkstücks gewährleistet. Das Werkstück, beispielsweise eine Kraftstoffeinspritzdüse, ist folglich mit einer optimalen Qualität herstellbar.

Die Verringerung der Energie der in das Schutzorgan eingekoppelten Laserstrahlung kann durch drei physikalische Effekte erreicht werden, wobei auch Kombinationen dieser Effekte möglich sind.

Gemäß einer ersten Variante wird die Laserstrahlung zumindest teilweise durch das Material des Schutzorgans absorbiert, was zu einer Erwärmung des Schutzorgans führt. Allenfalls ein minimaler Teil der Laserstrahlung tritt aus dem Schutzorgan wieder aus.

Gemäß einer zweiten Variante wird die Laserstrahlung durch das Schutzorgan dispergiert, d.h. der Laserstrahl wird aufgeweitet bzw. zerstreut. Dies bedeutet eine Verringerung der Intensität der Strahlung. Mit anderen Worten ist die Energie pro Flächeneinheit der Strahlung nach Austritt aus dem Schutzorgan reduziert.

Gemäß einer dritten Variante weist das Schutzorgan ein die Laserstrahlung leitendes Material auf. In diesem Fall wirkt das Schutzorgan also als Lichtleiter, durch den der Laserstrahl aus dem Hohlraum herausgeführt wird. Der weggeleitete Laserstrahl kann dann an einem entfernten Ort, beispielsweise durch ein geeignetes Absorptionsmedium, unschädlich gemacht werden.

Erfindungsgemäß ist ferner eine Zuführeinrichtung zur kontinuierlichen Zuführung des Schutzorgans in den Hohlraum während eines Bohrvorgangs vorgesehen. Durch die Zuführung des Schutzorgans in den Hohlraum ist gewährleistet, dass sich während eines Bohrvorgangs stets ein Abschnitt des Schutzorgans zwischen der Mündungsöffnung der Bohrung und dem gegenüberliegenden Wandabschnitt des Werkstücks befindet.

Dies ist insbesondere dann von Bedeutung, wenn das Schutzorgan ein die Laserstrahlung zumindest teilweise absorbierendes Material aufweist, bei welchem die Gefahr eines Materialverlustes durch Verdampfen besonders hoch ist. Durch die Zuführung des Schutzorgans in den Hohlraum kann die den Hohlraum begrenzende Wand des Werkstücks somit dauerhaft vor einer Beschädigung durch die Laserstrahlung geschützt werden.

Vorteilhafte Ausführungsformen der Erfindung sind den Unteransprüchen, der Beschreibung und der Zeichnung zu entnehmen.

Gemäß einer bevorzugten Ausbildung der Erfindung kann das Schutzorgan stab- oder drahtförmig ausgebildet sein oder eine Glasfaser aufweisen. Ein derartiges Schutzorgan ist nicht nur besonders stabil, sondern es ist auch einfach und kostengünstig herstellbar.

Vorteilhafterweise ist das Schutzorgan aus einem Material gebildet, welches thermisch besonders gut leitend ist und eine besonders hohe Schmelztemperatur aufweist. Ein aus einem solchen Material gebildetes Schutzorgan hält nicht nur besonders hohen Energieeinträgen Stand, sondern die absorbierte Energie kann in Form von Wärme auch besonders gut abtransportiert werden. Das Schutzorgan kann somit während einer Vielzahl von Bohrvorgängen eingesetzt werden, ohne dabei durch die Laserstrahlung aufgeschmolzen und/oder verdampft zu werden, d.h. die Lebensdauer des Schutzorgans ist noch weiter erhöht. Bevorzugt ist das Schutzorgan aus Kupfer, Wolfram oder Molybdän gebildet.

Gemäß einer weiteren bevorzugten Ausführungsform ist das Schutzorgan zumindest im Bereich der Mündungsöffnung der Bohrung mit einer zusätzlichen Schutzschicht versehen. Die Schutzschicht trägt dazu bei, ein Aufschmelzen bzw. Verdampfen des Schutzorgans noch besser zu verhindern. Dadurch wird die Lebensdauer des Schutzorgans und somit die Wirtschaftlichkeit der Vorrichtung noch weiter erhöht.

Die Schutzschicht kann eine Paste aufweisen, welche insbesondere ein in einem Silikonöl vermischtes Graphitpulver umfasst. Eine solche Schutzschicht hat sich in der Praxis als zusätzlicher Schutz vor einem Abtrag des Materials des Schutzorgans bewährt.

Gemäß einer weiteren besonders vorteilhaften Ausführungsform ist das in den Hohlraum eingeführte Schutzorgan relativ zu dem Werkstück derart bewegbar, dass es eine Rotationsbewegung um seine Längsmittelachse und/oder eine Oszillationsbewegung in Richtung der Längsmittelachse ausführt. Eine derartige Bewegung des Schutzorgans verhindert, dass die Laserstrahlung während eines Bohrvorgangs immer an ein und derselben Stelle einkoppelt. Auf diese Weise wird eine lokale Erhitzung des Schutzorgans verhindert und dadurch, insbesondere bei einem die Laserstrahlung absorbierenden Schutzorgan, ein lokal begrenzter Abtrag des Materials des Schutzorgans vermieden. Im Ergebnis wird die Lebensdauer des Schutzorgans dadurch noch weiter erhöht.

Vorzugsweise ist eine, insbesondere mit einer Rotationseinrichtung zur Rotation des in den Hohlraum eingeführten Schutzorgans gekoppelte, Überwachungseinrichtung zur Überwachung der Rotationsbewegung des Schutzorgans vorgesehen. Mit Hilfe dieser Überwachungseinrichtung kann sichergestellt werden, dass sich das Schutzorgan insbesondere während eines Bohrvorgangs kontinuierlich dreht. Ein Abtrag von Schutzorganmaterial kann dadurch noch besser verhindert werden und die Lebensdauer des Schutzorgans noch weiter erhöht werden.

Um das Schutzorgan in eine Oszillationsbewegung entlang seiner Längsmittelachse zu versetzen, kann die Zuführeinrichtung verwendet werden. Anstelle der Zuführeinrichtung kann hierfür jedoch auch eine separate Oszillationseinrichtung vorgesehen sein.

Alternativ oder zusätzlich zu einer Rotationsbewegung verhindert auch die Oszillationsbewegung des Schutzorgans, dass die aus der Mündungsöffnung der Bohrung austretende Laserstrahlung stets an ein und derselben Stelle in das Schutzorgan einkoppelt. Somit trägt auch die Oszillationsbewegung des Schutzorgans zu einer Erhöhung der Lebensdauer des Schutzorgans bei.

Besonders vorteilhaft ist es, wenn eine, insbesondere mit einer Zuführeinrichtung für das Schutzorgan und/oder mit einer Oszillationseinrichtung zur Oszillation des Schutzorgans in Richtung der Längsmittelachse gekoppelte, Detektionseinrichtung zur Detektion einer Kollision des Schutzorgans mit einem den Hohlraum begrenzenden Wandabschnitt des Werkstücks vorgesehen ist.

Ist das Werkstück während eines Bohrvorgangs auf einen in den Hohlraum hineinragenden Führungsdorn aufgesteckt und durch diesen nicht klemmend gehalten, sondern nur geführt, so besteht die Gefahr, dass das Werkstück durch das Schutzorgan von dem Führungsdorn abgehoben oder zumindest angehoben wird, wenn das Schutzorgan, beispielsweise bei einer Zugführung in den Hohlraum oder bei der Ausführung einer Oszillationsbewegung, an die den Hohlraum begrenzende Wand des Werkstücks anstößt. Eine solche unbeabsichtigte Bewegung des Werkstücks würde einen Bohrvorgang empfindlich stören und insbesondere die Präzision der Bohrung beeinträchtigen.

Durch die Detektionseinrichtung kann eine solche Kollision des Schutzorgans mit der Wand des Werkstücks festgestellt und die Zuführung und/oder Oszillationsbewegung des Schutzorgans gestoppt oder sogar umgekehrt werden, bevor es zu einem Anheben des Werkstücks kommt. Dadurch ist eine Herstellung von Werkstücken, beispielsweise Einspritzdüsen, von optimaler Qualität sichergestellt.

Vorzugsweise ist ein in den Hohlraum einsetzbarer Führungsdorn zur zumindest bereichsweisen Führung des Schutzorgans vorgesehen, welcher insbesondere einen entlang seiner Mittelachse verlaufenden Führungskanal aufweist, in dem das Schutzorgan relativ zum Führungsdorn bewegbar aufnehmbar ist. Der Führungsdorn dient nicht nur zur Führung bzw. Halterung des Werkstücks, sondern auch zur Führung des Schutzorgans und erfüllt somit eine Doppelfunktion. Gleichzeitig ist der Führungskanal des Führungsdorns derart ausgebildet, dass eine Rotations- und/oder Oszillationsbewegung des in den Hohlraum eingeführten Schutzorgans möglich ist.

Nachfolgend wird die Erfindung rein beispielhaft anhand vorteilhafter Ausführungsformen unter Bezugnahme auf die Zeichnung beschrieben. Es zeigen:
- Fig. 1: eine Ausführungsform der erfindungsgemäßen Vorrichtung mit einem Laserstrahlung zumindest teilweise absorbierenden Schutzorgan;
- Fig. 2: eine Ausführungsform der erfindungsgemäßen Vorrichtung mit einem Laserstrahlung zumindest teilweise dispergierenden Schutzorgan; und
- Fig. 3: eine Ausführungsform der erfindungsgemäßen Vorrichtung mit einem Laserstrahlung leitendem Schutzorgan.

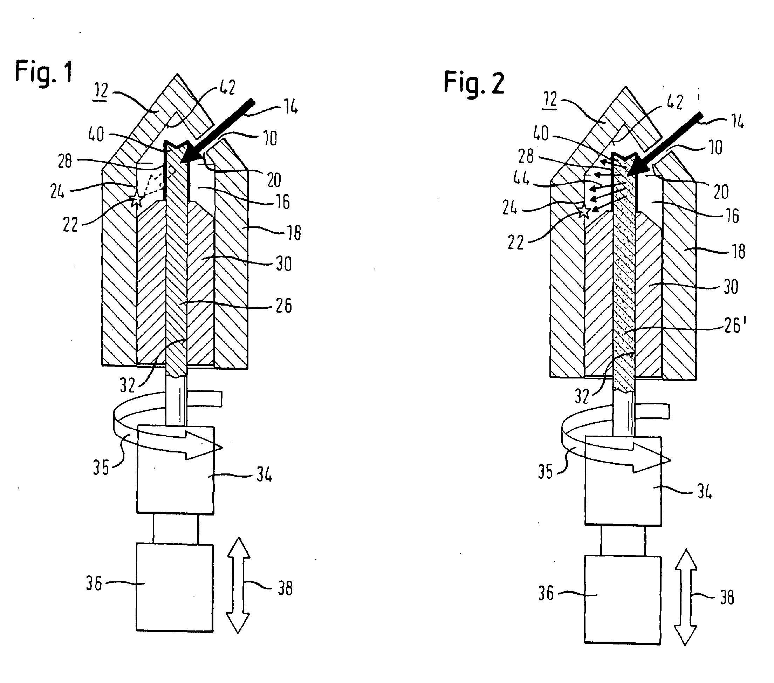

In Fig. 1 ist eine erste Ausführungsform der erfindungsgemäßen Vorrichtung dargestellt, welche zur Herstellung einer Bohrung 10 in einem Werkstück 12 mittels eines durch einen nicht dargestellten Laser erzeugten Laserstrahls 14 dient.

Bei dem Werkstück 12 handelt es sich hier um eine Kraftstoffeinspritzdüse, die einen Hohlraum 16 aufweist, in den die fertige Bohrung 10 mündet. Sobald der Laserstrahl 14 die den Hohlraum 16 begrenzende Wand 18 des Werkstücks 12 durchbrochen hat, tritt der Laserstrahl 14 durch eine Mündungsöffnung 20 der Bohrung 10 in den Hohlraum 16 ein.

Im Falle eines ungehinderten Durchgangs durch den Hohlraum 16 würde der Laserstrahl 14 in einem Bereich 22, der in der Zeichnung durch einen Stern gekennzeichnet ist, auf einen der Mündungsöffnung 20 gegenüberliegenden Wandabschnitt 24 der den Hohlraum 16 begrenzenden Wand 18 auftreffen.

Da der Laserstrahl 14 so energiereich ist, dass er die Wand 18 durchbohren kann, würde ein ungehindert auf den Wandabschnitt 24 auftreffender Laserstrahl 14 (in Fig. 1 gestrichelt dargestellt) folglich auch im Bereich 22 Material abtragen, wodurch die Funktion der Kraftstoffeinspritzdüse 12 negativ beeinflusst würde, d.h. also die Qualität der Kraftstoffeinspritzdüse 12 vermindert würde.

Um dies zu verhindern, wird ein Schutzorgan 26 in den Hohlraum 16 eingeführt und so in den Strahlengang des Laserstrahls 14 eingebracht, dass dieser nicht mehr ungehindert auf den der Mündungsöffnung 20 gegenüberliegenden Wandabschnitt 24 des Werkstücks 12 treffen kann. Das Schutzorgan 26 ist stab- oder stangenförmig ausgebildet und weist vorzugsweise einen runden Querschnitt auf. Es kann sich bei dem Schutzorgan 26 beispielsweise um ein Drahtmaterial handeln.

Bei dem in Fig. 1 dargestellten Ausführungsbeispiel ist das Schutzorgan 26 aus einem Material gebildet, welches den Laserstrahl 14 zumindest teilweise absorbiert. Um eine ausreichende Menge von Material zur Absorption des Laserstrahls 14 bereitzustellen, ist das Schutzorgan 26 maissiv, d.h. nicht hohl, ausgebildet.

Bei der Absorption der Laserstrahlung wird die Energie des Laserstrahls 14 in Wärme umgewandelt. Da bei einer übermäßen Erhitzung des Schutzorgans 26 die Gefahr eines Aufschmelzens oder sogar Verdampfens des Materials des Schutzorgans 26 besteht, sollte die durch den Laserstrahl 14 in das Schutzorgan 26 eingebrachte Wärme möglichst schnell abgeführt werden. Aus diesem Grund ist das Schutzorgan 26 aus einem thermisch besonders gut leitenden Material gebildet.

Um die Gefahr eines Verlustes von Material des Schutzorgans 26 noch weiter zu vermindern, sollte das Material des Schutzorgans 26 darüber hinaus eine besonders hohe Schmelztemperatur aufweisen. Als Materialien für das Schutzorgan 26 eignen sich daher besonders gut Kupfer, Wolfram oder Molybdän.

Grundsätzlich kann das Schutzorgan 26 auch aus Stahl, Quarz, Saphir oder einkristallinem oder polykristallinem Diamant gebildet sein. Diese Materialien weisen jedoch entweder keine ausreichend hohe thermische Leitfähigkeit und/oder Schmelztemperatur auf, oder sie sind aus Kostengründen unwirtschaftlich.

Um einem Abtrag von Material des Schutzorgans 26 noch besser entgegenzuwirken, ist das Schutzorgan 26 im Bereich der Mündungsöffriung 20 ferner mit einer zusätzlichen Schutzschicht 28 versehen. Die Schutzschicht 28 ist durch eine Paste gebildet, welche ein in einem Silikonöl vermischtes Graphitpulver aufweist.

Zur Führung des Schutzorgans 26 in dem Hohlraum 16 ist ein Führungsdorn 30 vorgesehen, der während des Bohrvorgangs in den Hohlraum 16 eingesetzt ist. Der Führungsdorn 30 weist einen Führungskanal 32 auf, der sich etwa entlang einer Längsmittelachse des Hohlraums 16 erstreckt. Der Führungskanal 32 dient zur Aufnahme des Schutzorgans 26 und ist so ausgebildet, dass sich das Schutzorgan 26 relativ zum Führungsdorn 30 bewegen lässt.

Im Bereich seines von der Mündungsöffnung 20 wegweisenden Endes ist das Schutzorgan 26 an eine Rotationseinrichtung 34 angekoppelt, durch welche das Schutzorgan 26 um seine Achse rotierbar ist. Die Rotationsbewegung des Schutzorgans 26 ist in der Zeichnung durch den mit dem Bezugszeichen 35 versehen Pfeil angedeutet.

Über die Rotationseinrichtung 34 ist das Schutzorgan 26 außerdem mit einer Zuführ-/Oszillationseinrichtung 36 verbunden, durch welche das Schutzorgan 26 - auch während eines Bohrvorgangs - kontrolliert in den Hohlraum 16 einführbar ist. Dadurch kann selbst bei einem möglichen Materialabtrag sichergestellt werden, dass stets eine ausreichende Menge von Material des Schutzorgans 26 zur Verfügung steht, um den aus der Mündungsöffnung 20 austretenden Laserstrahl 14 wirksam zu absorbieren.

Darüber hinaus kann das Schutzorgan 26 durch die Zuführ-/Oszillationseinrichtung 36 in eine Oszillationsbewegung in axialer Richtung, d.h. entlang der Längsmittelachse des Hohlraums 16, versetzt werden, wie es durch den Pfeil 38 angedeutet ist.

Sowohl die Rotationsbewegung 35 als auch die Oszillationsbewegung 38 des Schutzorgans 26 bewirkt eine ständige Veränderung des Ortes, an dem der Energieeintrag durch den Laserstrahl 14 in das Schutzorgan 26 erfolgt. Hierdurch wird eine punktuelle Erhitzung und somit ein lokal begrenzter Abtrag von Material des Schutzorgans 26 verhindert und die Lebensdauer des Schutzorgans 26 erhöht.

Um die Rotationsbewegung 35 des Schutzorgans 26 während des gesamten Bohrvorgangs sicherzustellen, ist eine nicht gezeigte Überwachungseinrichtung zur Überwachung der Rotationsbewegung 35 vorgesehen, die mit der Rotationseinrichtung 34 verbunden ist. Ist zur Erzeugung der Rotationsbewegung 35 des Schutzorgans 26 ein Elektromotor vorgesehen, so kann die Rotationsüberwachungseinrichtung ein Strommessgerät umfassen, welches den Stromfluss durch den Elektromotor überwacht.

Bei Veränderungen des Stromflusses durch den Elektromotor, welche auf erhöhte Reibungskräfte, beispielsweise zwischen dem Schutzorgan 26 und dem Führungsdorn 30, und somit auf eine unregelmäßige Rotationsbewegung 35 hindeuten können, würde die Rotationsüberwachungseinrichtung ein geeignetes Steuersignal zur Wiederherstellung einer gleichmäßigen Rotationsbewegung 35 an die Rotationseinrichtung 34 übermitteln.

Wird das Schutzorgan 26 durch die Zuführ-/Oszillationseinrichtung 36 zu weit in den Hohlraum 16 hinein bewegt, so stößt das freie Ende 40 des Schutzorgans 26 an einen (in der Zeichnung oberen) Wandabschnitt 42 der den Hohlraum 16 begrenzenden Wand 18 an. Dabei besteht die Gefahr, dass das Werkstück 12 während eines Bohrvorgangs angehoben oder sogar von dem Führungsdorn 30 abgehoben wird, wodurch die Präzision der Bohrung 10 beeinträchtigt würde.

Um dies zu verhindern, ist eine nicht gezeigte, mit der Zuführ-/Oszillationseinrichtung 36 verbundene Detektionseinrichtung zur Detektion einer Kollision des Schutzorgans 26 mit dem Wandabschnitt 42 vorgesehen. Sobald diese Detektionseinrichtung feststellt, dass das Schutzorgan 26 an den Wandabschnitt 42 anstößt, übermittelt die Detektionseinrichtung ein geeignetes Signal an die Zuführ-/Oszillationseinrichtung 36, durch welches die Bewegung des Schutzorgans 26 in den Hohlraum 16 hinein gestoppt oder umgekehrt wird.

In Fig. 2 ist eine zweite Ausführungsform der erfindungsgemäßen Vorrichtung dargestellt, die im Wesentlichen der voranstehend beschriebenen ersten Ausführungsform gleicht. Nachfolgend werden deshalb lediglich die Unterschiede zur ersten Ausführungsform erläutert. Hinsichtlich der übrigen, übereinstimmenden Merkmale wird auf die voranstehende Beschreibung verwiesen.

Im Gegensatz zur ersten Ausführungsform ist das Schutzorgan 26' der zweiten Ausführungsform aus einem Material gebildet, welches den Laserstrahl 14 im Wesentlichen dispergiert. Der in das Schutzorgan 26' einkoppelnde Laserstrahl 14 wird mit anderen Worten durch das Schutzorgan 26' aufgeweitet bzw. zerstreut. An einer der Eintrittsseite des Laserstrahls 14 abgewandten Seite des Schutzorgans 26' tritt also diffuses bzw. ungebündeltes Licht 44 aus dem Schutzorgan 26' aus.

Aufgrund der Dispersion bzw. Zerstreuung des Laserstrahls 14 weist das aus dem Schutzorgan 26' austretende Licht 44 eine Energie auf, die so gering ist, dass die den Hohlraum 16 begrenzende Wand 18 durch das Licht 44 nicht beschädigt wird.

Obwohl das Schutzorgan 26' der zweiten Ausführungsform so ausgebildet ist, dass der überwiegende Teil der in das Schutzorgan 26' eingekoppelten Laserstrahlung als energiearmes Licht 44 aus dem Schutzorgan 26' wieder austritt, ist es durchaus möglich, dass ein gewisser Teil der Laserstrahlung durch das Schutzorgan 26' absorbiert wird und somit zu einer Erwärmung des Schutzorgans 26' führt. Wie bei der ersten Ausführungsform ist es zur Erhöhung der Lebensdauer des Schutzorgans 26' deshalb vorgesehen, das Schutzorgan 26' während eines Bohrvorgangs in eine Rotationsbewegung 35 und/oder Oszillationsbewegung 38 zu versetzen.

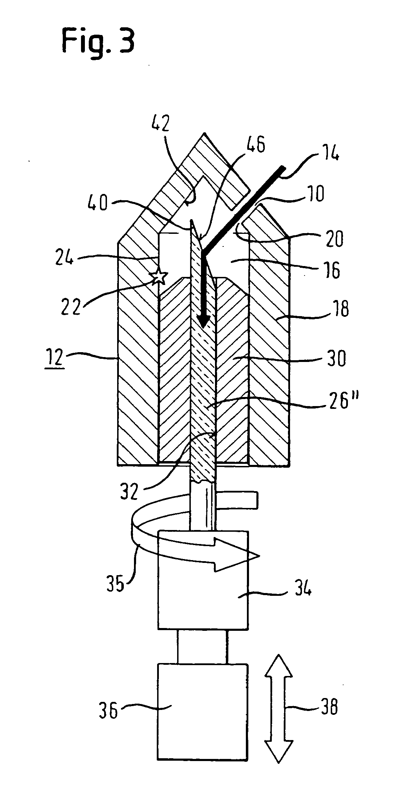

In Fig. 3 ist eine dritte Ausführungsform der erfindungsgemäßen Vorrichtung dargestellt, die ebenfalls der ersten Ausführungsform ähnelt. Auch hier werden nachfolgend lediglich die Unterschiede zur ersten Ausführungsform erläutert und hinsichtlich der übrigen, übereinstimmenden Merkmale auf die Beschreibung im Zusammenhang mit Fig. 1 verwiesen.

Anders als bei den vorherigen Ausführungsbeispielen ist das Schutzorgan 26" der Vorrichtung gemäß der dritten Ausführungsform aus einem die Laserstrahlung leitenden Material gebildet. Das Schutzorgan 26" bildet mit anderen Worten einen optischen Leiter für den Laserstrahl 14. Bei dem Schutzorgan 26" kann es sich beispielsweise um eine Glasfaser handeln.

Der aus der Mündungsöffnung 20 austretende Laserstrahl 14 koppelt, vorzugsweise über eine entsprechend abgewinkelte Schrägfläche 46, in das Schutzorgan 26" ein und wird durch dieses aus dem Hohlraum 16 herausgeleitet und außerhalb des Hohlraums 16 energetisch geschwächt, beispielsweise in einem geeigneten Absorptionsmedium absorbiert.

Bei dem in Fig. 3 dargestellten Ausführungsbeispiel erstreckt sich die Schrägfläche 46 quer durch das Schutzorgan 26". Dies führt dazu, dass der Laserstrahl 14 in einer bestimmten Rotationsstellung, nämlich dann, wenn die Schrägfläche 46 zur Mündungsöffnung 20 weist, besonders gut in das Schutzorgan 26" einkoppeln kann.

Um eine optimale Einkopplung des Laserstrahls 14 in jeder Rotationsstellung des Schutzorgans 26" zu erreichen, bietet es sich an, das Schutzorgan 26" im Bereich seines freien, in den Hohlraum 16 weisenden Endes 40 kegelförmig auszubilden.

Um die Einkopplung des Laserstrahls 14 in das Schutzorgan 26" noch weiter zu verbessern, ist dieses außerdem - anders als die Schutzorgane gemäß erster und zweiter Ausführungsform - nicht mit einer zusätzlichen Schutzschicht 28 versehen.

Obwohl das Schutzorgan 26" der dritten Ausführungsform so ausgebildet ist, dass die eingekoppelte Laserstrahlung zum überwiegenden Teil abgeleitet wird, lässt es sich nicht vermeiden, dass ein gewisser Teil der Laserstrahlung in dem Schutzorgan 26" auch absorbiert wird. Zum Schutz des Schutzorgans 26" vor einer übermäßigen lokal begrenzten Erhitzung, ist es daher auch bei der dritten Ausführungsform vorgesehen, das Schutzorgan 26" in eine Oszillationsbewegung 38 und/oder Rotationsbewegung 35 zu versetzen.

### Bezugszeichenliste

- 10: Bohrung
- 12: Werkstück
- 14: Laserstrahl
- 16: Hohlraum
- 18: Wand
- 20: Mündungsöffnung
- 22: Bereich
- 24: Wandabschnitt
- 26: Schutzorgan
- 28: Schutzschicht
- 30: Führungsdorn
- 32: Führungskanal
- 34: Rotationseinrichtung
- 35: Rotationsbewegung
- 36: Zuführ-/Oszillationseinrichtung
- 38: Oszillationsbewegung
- 40: freies Ende
- 42: Wandabschnitt
- 44: Licht
- 46: Schrägfläche

## Patentansprüche

1. Vorrichtung zur Herstellung einer in einen Hohlraum (16) eines Werkstücks (12), insbesondere einer Kraftstoffeinspritzdüse, mündenden Bohrung (10) mittels Laserstrahlung (14), mit einem in den Hohlraum (16) einführbaren und zwischen eine Mündungsöffnung (20) der Bohrung (10) und einen der Mündungsöffnung (20) gegenüberliegenden und den Hohlraum (16) begrenzenden Wandabschnitt (24) des Werkstücks (12) bringbaren, massiv, d.h. nicht hohl, ausgebildeten Schutzorgan (26), welches ein die Laserstrahlung (14) zumindest teilweise absorbierendes, dispergierendes oder leitendes Material aufweist,
**dadurch gekennzeichnet,**
**dass** eine Zuführeinrichtung (36) zur kontinuierlichen Zuführung des Schutzorgans (26) in den Hohlraum (16) während eines Bohrvorgangs vorgesehen ist.

2. Vorrichtung nach Anspruch 1,
**dadurch gekennzeichnet,**
**dass** das Schutzorgan (26) stab- oder drahtförmig ausgebildet ist oder eine Glasfaser aufweist.

3. Vorrichtung nach Anspruch 1 oder 2,
**dadurch gekennzeichnet,**
**dass** das Schutzorgan (26) aus einem Material, welches thermisch besonders gut leitend ist und eine besonders hohe Schmelztemperatur aufweist, und bevorzugt aus Kupfer, Wolfram oder Molybdän gebildet ist.

4. Vorrichtung nach einem der vorherigen Ansprüche,
**dadurch gekennzeichnet,**
**dass** das Schutzorgan (26) zumindest im Bereich der Mündungsöffnung (20) der Bohrung (10) mit einer zusätzlichen Schutzschicht (28) versehen ist.

5. Vorrichtung nach Anspruch 4,
**dadurch gekennzeichnet,**
**dass** die Schutzschicht (28) eine Paste aufweist, welche insbesondere ein in einem Silikonöl vermischtes Graphitpulver umfasst.

6. Vorrichtung nach einem der vorherigen Ansprüche,
**dadurch gekennzeichnet,**
**dass** das in den Hohlraum (16) eingeführte Schutzorgan (26) relativ zu dem Werkstück (12) derart bewegbar ist, dass es eine Rotationsbewegung (35) um seine Längsmittelachse und/oder eine Oszillationsbewegung (38) im Richtung der Längsmittelachse ausführt.

7. Vorrichtung nach einem der vorherigen Ansprüche,
**dadurch gekennzeichnet,**
**dass** eine, insbesondere mit einer Rotationseinrichtung (34) zur Rotation des in den Hohlraum (16) eingeführten Schutzorgans (26) gekoppelte, Überwachungseinrichtung zur Überwachung der Rotationsbewegung (35) des Schutzorgans (26) vorgesehen ist.

8. Vorrichtung nach einem der vorherigen Ansprüche,
**dadurch gekennzeichnet,**
**dass** eine, insbesondere mit der Zuführeinrichtung (36) für das Schutzorgan (26) und/oder mit einer Oszillationseinrichtung (36) zur Oszillation des Schutzorgans (26) in Richtung der Längsmittelachse gekoppelte, Detektionseinrichtung zur Detektion einer Kollision des Schutzorgans (26) mit einem den Hohlraum (16) begrenzenden Wandabschnitt (42) des Werkstücks (12) vorgesehen ist.

9. Vorrichtung nach einem der vorherigen Ansprüche,
**dadurch gekennzeichnet,**
**dass** ein in den Hohlraum (16) einsetzbarer Führungsdorn (30) zur zumindest bereichsweisen Führung des Schutzorgans (26) vorgesehen ist, welcher insbesondere einen entlang seiner Längsmittelachse verlaufenden Führungskanal (32) aufweist, in dem das Schutzorgan (26) relativ zum Führungsdorn (30) bewegbar aufnehmbar ist.

## Claims

1. An apparatus for the manufacture of a bore (10) opening into a hollow space (16) of a workpiece (12), in particular of a fuel injection nozzle, by means of laser radiation (14) comprising a protective member (26) which can be introduced into the hollow space (16), can be brought between a mouth (20) of the bore (10) and a wall section (24) of the workpiece (12) disposed opposite the mouth (20) and bounding the hollow space (16), which is made in solid form, i.e. not hollow, and which comprises a material which absorbs, disperses or conducts the laser radiation (14) at least in part,
**characterized in that**
a feed device (36) is provided for the continuous feed of the protective member (26) into the hollow space (16) during a boring process.

2. An apparatus in accordance with claim 1, **characterized in that** the protective member (26) is made in rod or wire form or has a glass fiber.

3. An apparatus in accordance with claim 1 or claim 2, **characterized in that** the protective member (26) is made from a material which has particularly good thermal conductivity and a particularly high melting temperature and preferably from copper, tungsten or molybdenum.

4. An apparatus in accordance with any one of the preceding claims, **characterized in that** the protective member (26) is provided with an additional protective layer (28) at least in the region of the mouth (20) of the bore (10).

5. An apparatus in accordance with claim 4, **characterized in that** the protective layer (28) comprises a paste which in particular includes a graphite powder mixed in a silicone oil.

6. An apparatus in accordance with any one of the preceding claims, **characterized in that** the protective member (26) introduced into the hollow space (16) is movable relative to the workpiece (12) such that it carries out a rotary movement (35) about its longitudinal central axis and/or an oscillatory movement (38) in the direction of the longitudinal central axis.

7. An apparatus in accordance with any one of the preceding claims, **characterized in that** a monitoring device, in particular a monitoring device coupled with a rotary device (34) for the rotation of the protective member (26) introduced into the hollow space (16), is provided for the monitoring of the rotary movement (35) of the protective member (26).

8. An apparatus in accordance with any one of the preceding claims, **characterized in that** a detection device, in particular a detection device coupled with the feed device (36) for the protective member (26) and/or with an oscillation device (36) for the oscillation of the protective member (26) in the direction of the longitudinal central axis, is provided for the detection of a collision of the protective member (26) with a wall section (42) of the workpiece (12) bounding the hollow space (16).

9. An apparatus in accordance with any one of the preceding claims, **characterized in that** a guide member (30) which can be inserted into the hollow space (16) is provided for the at least regional guidance of the protective member (26), said guide member in particular having a guide passage (32) which extends along its central axis and in which the protective member (26) can be movably received relative to the guide member (30).

## Revendications

1. Dispositif de fabrication d'un alésage (10) débouchant dans une cavité (16) d'une pièce à usiner (12), en particulier un injecteur de carburant, au moyen d'un faisceau laser (14), avec un organe de protection (26) pouvant être introduit dans la cavité (16), et pouvant être amené entre un orifice d'admission (20) de l'alésage (10) et un segment de paroi (24) de la pièce à usiner (12) opposé à l'orifice d'admission (20) et délimitant la cavité (16), et conçu massif, c'est-à-dire non creux, qui comprend un matériau conducteur ou dispersif absorbant au moins partiellement le faisceau laser (14),
**caractérisé en ce que**,
un dispositif d'amenée est prévu pour l'amenée continue de l'organe de protection (26) dans la cavité (16) pendant un processus d'alésage.

2. Dispositif selon la revendication 1,
**caractérisé en ce que**,
l'organe de protection (26) est conçu en forme d'aiguille ou de fil ou comprend une fibre de verre.

3. Dispositif selon la revendication 1 ou 2,
**caractérisé en ce que**,
l'organe de protection (26) est formé d'un matériau, qui est particulièrement conducteur thermiquement et présente une température de fusion particulièrement élevée, et est de préférence en cuivre, tungstène ou molybdène.

4. Dispositif selon une des revendications précédentes,
**caractérisé en ce que**,
l'organe de protection (26) est muni, au moins dans la zone de l'orifice d'admission (20) de l'alésage (10), d'une couche de protection supplémentaire (28).

5. Dispositif selon la revendication 4,
**caractérisé en ce que**,
la couche de protection (28) comporte une pâte qui comprend en particulier une poudre de graphite mélangée dans une huile de silicone.

6. Dispositif selon une des revendications précédentes,
**caractérisé en ce que**,
l'organe de protection (26) introduit dans la cavité (16) est mobile par rapport à la pièce à usiner (12), de sorte qu'il exécute un mouvement de rotation (35) autour de son axe longitudinal et/ou un mouvement oscillant (38) selon la direction de l'axe longitudinal.

7. Dispositif selon une des revendications précédentes,
**caractérisé en ce que**,
un dispositif de contrôle couplé en particulier avec un dispositif de rotation (34) pour la rotation de l'organe de protection (26) introduit dans la cavité (16) est prévu pour contrôler le mouvement de rotation (35) de l'organe de protection (26).

8. Dispositif selon une des revendications précédentes,
**caractérisé en ce que**,
un dispositif de détection, couplé en particulier avec le dispositif d'amenée (36) pour l'organe de protection (26), et/ou avec un dispositif d'oscillation (36) pour l'oscillation de l'organe de protection (26) en direction de l'axe longitudinal, est prévu pour la détection d'une collision de l'organe de protection (26) avec un segment de paroi (42), délimitant la cavité (16), de la pièce à usiner (12).

9. Dispositif selon une des revendications précédentes,
**caractérisé en ce que**,
un mandrin de guidage (30) pouvant être utilisé dans la cavité (16) pour le guidage au moins sectoriel de l'organe de protection (26) est prévu, lequel comporte en particulier un canal de guidage (32) s'étendant le long de son axe longitudinal, dans lequel l'organe de protection (26) peut être logé de façon mobile par rapport au mandrin de guidage (30).
